# EUROPEAN PATENT APPLICATION

(11) **EP 4 617 539 A1**
(43) Date of publication of application: **17.09.2025**
(21) Application number: 23902147.0
(22) Date of filing: 18.08.2023
(51) Int. Cl.: F16L 29/04

(54) **STOP VALVE STRUCTURE, FLUID CONVEYING STRUCTURE, ENERGY STORAGE SYSTEM, AND ELECTRICAL DEVICE**

(30) Priority: 12.12.2022 CN 202223342620 U
(71) Applicant: Sungrow Power Supply Co., Ltd., Hefei, Anhui 230088 (CN)
(72) Inventor: WANG, Peng, Hefei, Anhui 230088 (CN); ZHANG, Haixiao, Hefei, Anhui 230088 (CN)
(74) Representative: Rooney, John-Paul
(86) International application number: PCT/CN2023/113686
(87) International publication number: WO 2024/124938

(57) **Abstract**

A stop valve structure (20), comprising a male valve (21) and a female valve (23). The male valve (21) comprises a male pipe (211) and a male piston (212), a first channel (210) is formed in the male pipe (211) and penetrates the male pipe (211), and the male piston (212) is movably arranged in the first channel (210) to block or open the first channel (210); the female valve (23) comprises a female pipe (231) and a female piston (232), a second channel (230) is formed in the female pipe (231) and penetrates the female pipe (231), and the female piston (232) is movably arranged in the second channel (230) to block or open the second channel (230); when the male pipe (211) is connected to the female pipe (231), the male piston (212) abuts against the female piston (232), and the first channel (210) is communicated with the second channel (230); and when the male pipe (211) is disconnected from the female pipe (231), the male piston (212) is distant from the female piston (232), and the first channel (210) and the second channel (230) are separately blocked. A fluid conveying structure, the stop valve structure (20) being provided at a position where a main pipe (10) and a branch pipe (30) are communicated. An energy storage system, comprising the fluid conveying structure and a battery pack (50). An electrical device, comprising the energy storage system. In this way, the male valve and the female valve are separately communicated with pipelines, and the male valve and the female valve can be opened and blocked, thereby guaranteeing that the pipelines are separately blocked in a maintenance process, and preventing a cooling medium in the pipelines from being discharged.

## Description

The present application claims the priority to Chinese Patent Application No. 202223342620.2, titled "STOP VALVE STRUCTURE, FLUID CONVEYING STRUCTURE, ENERGY STORAGE SYSTEM, AND ELECTRICAL DEVICE", filed on December 12, 2022 with the China National Intellectual Property Administration, which is incorporated herein by reference in its entirety.

### FIELD

The present application relates to the technical field of energy storage, and in particular to a stop valve structure, a fluid conveying structure, an energy storage system and an electrical device.

### BACKGROUND

In various energy storage technologies, batteries have emerged as a preferred solution for industrial and vehicular energy storage devices for their high energy density characteristics and promising commercial prospects. However, large-capacity, high-power energy storage battery systems are sensitive to temperature changes. A long exposure to high and low temperatures and accumulation for temperature differentials in the system degrade the lifespan and performance of the batteries. Therefore, a specialized cooling device should be used to dissipate heat when an energy storage battery system is in operation, while ensuring a consistent temperature throughout the system as much as possible.

Existing liquid-cooled devices for the energy storage systems typically require the addition of coolant into the battery pack. However, both the pipes and the battery pack may need to be replaced for being damaged. Currently, to replace components of the liquid-cooled devices, coolant of the entire system needs to be drained, which is a time-consuming process. Improper drainage of the coolant may pose environmental pollution issues, and it is also difficult to reintroduce the coolant into the system, resulting in a significant waste of manpower and resources.

Even valves can be used to shut off the pipes, separating the pipes on both ends of the valve still results in only one end of the pipe being sealed off, and the other end remaining open. In this case, the coolant will drain out from the other end of the pipe, and residual coolant discharge remains a problem.

### SUMMARY

An object of the present application is to provide a stop valve structure, so as to facilitate the replacement of pipes used for conveying cooling medium in an energy storage system, as well as the battery pack, without the need to drain the cooling medium during the pipe replacement process.

In order to implement the above objects, a stop valve structure is provided according to the present application, including a male valve and a female valve. The male valve includes a male pipe and a male piston, a first channel is formed in the male pipe and passes through the male pipe, and the male piston is movable in the first channel so as to block the first channel or make the first channel in communication;
the female valve includes a female pipe and a female piston, a second channel is formed in the female pipe and passes through the female pipe, and the female piston is movably arranged in the second channel to block the second channel or make the second channel in communication;
when the male pipe is connected to the female pipe, the male piston abuts against the female piston, and the first channel is communicated with the second channel;
when the male pipe is disconnected from the female pipe, the male piston is distant from the female piston, and the first channel and the second channel are respectively blocked.

In an embodiment, a first limiting protrusion is formed on an inner wall of the male pipe. The first limiting protrusion divides the first channel into a first segment and a second segment connected with each other, and both ends of the male piston are respectively disposed in the first segment and the second segment, so that one end of the male piston is stopped when the male piston moves to the first limiting protrusion and the first channel is blocked. A second limiting protrusion is formed on an inner wall of the female pipe. The second limiting protrusion divides the second channel into a third segment and a fourth segment connected with each other, and both ends of the female piston are respectively disposed in the third segment and the fourth segment, so that one end of the female piston is stopped when the female piston moves to the second limiting protrusion and the second channel is blocked.

In an embodiment, the male piston comprises:
a male piston rod passing through the first segment and the second segment, with a first gap being formed between the male piston rod and the first limiting protrusion; and
two male stop plates respectively disposed at both ends of the male piston rod, with a first slit being formed between the periphery of each male stop plate and the inner wall of the first channel, so that one of the male stop plates is stopped when the male stop plate moves to the first limiting protrusion and the first gap is sealed;
the female piston comprises:
   a female piston rod passing through the third segment and the fourth segment, with a second gap being formed between the female piston rod and the second limiting protrusion; and
   two female stop plates respectively disposed at both ends of the female piston rod, a second slit being formed between the periphery of each female stop plate and the inner wall of the second channel, so that one of the female stop plates is stopped when the female stop plate moves to the second limiting protrusion and the second gap is sealed.

In an embodiment, one end of the male pipe is defined as a male valve body connection end, one end of the female pipe is defined as a female valve body connection end, and the female valve body connection end is inserted into the male valve body connection end;
an end of the male piston rod located at the male valve body connection end protrudes from the end of the male pipe, and an end of the female piston rod located the female valve body connection end is disposed inside the female pipe.

In an embodiment, the first segment is defined as being located at the male valve body connection end, and the male piston rod is provided with a first spring sleeved outside an outer circumferential surface of the first segment;
and/or, the third segment is defined as being located at the female valve body connection end, and the female piston rod is provided with a second spring sleeved outside an outer circumferential surface of the third segment;
and/or, the third segment is defined as being located at the female valve body connection end, and the female stop plate located in the third segment is provided with a through hole, a projection of which corresponds to the second limiting protrusion;
and/or, the second segment is defined as facing away from the male valve body connection end, and a first sealing ring is provided between the male stop plate located in the second segment and the first limiting protrusion;
and/or, the fourth segment is defined as facing away from the female valve body connection end, and a second sealing ring is provided between the female stop plate located in the fourth segment and the second limiting protrusion.

A fluid conveying structure is provided according to the present application, including a pipe unit having a main pipe carrying fluid and a branch pipe,
the branch pipe is detachably mounted on the main pipe and is in communication with the main pipe, and the stop valve structure described above is provided at the connection between the main pipe and the branch pipe, and the main pipe is provided with one of the male valve and the female valve, and the branch pipe is provided with the other of the male valve and the female valve; and
the branch pipe is used to convey fluid to a battery pack or to discharge fluid from the battery pack.

In an embodiment, the fluid conveying structure includes at least two pipe units, and at least one of the pipe units is a liquid inlet pipe and at least another is a return pipe,
the liquid inlet pipe is used to introduce fluid into the battery pack, and the liquid return pipe is used to discharge fluid from the battery pack.

In an embodiment, the main pipe includes at least two main pipe segments, and adjacent main pipe segments are connected in series through the stop valve structure, and the branch pipe includes at least two branch pipe segments, and adjacent branch pipe segments are connected in series through the stop valve structure;
and/or, the main pipe is provided with multiple infusion ports, with one infusion port being correspondingly connected to one branch pipe;
and/or, the main pipe is provided with a liquid discharge valve;
and/or, at least one branch pipe communicates with two main pipes, is arranged in parallel with one of the main pipes and intersects with the other main pipe.

An energy storage system is provided according to the present application, including the fluid conveying structure described above and a battery pack, and at least one branch pipe is connected to the battery pack, the stop valve structure is provided at the connection between the branch pipe and the battery pack, the battery pack is provided with one of the male valve and the female valve, and the branch pipe is provided with the other of the male valve and the female valve.

An electrical device is provided according to the present application, including the energy storage system described above.

The present application provides the stop valve structure including the male valve and the female valve. The male valve includes the male pipe and the male piston, and the first channel is formed in the male pipe and passes through the male pipe, and the male piston is movably disposed within the first channel to block the first channel or make the first channel in communication. The female valve includes the female pipe and the female piston, and the second channel is formed in the female pipe and passes through the female pipe, and the female piston is movably disposed within the second channel to block the second channel or make the second channel in communication. When the male pipe is connected to the female pipe, the male piston presses against the female piston, allowing the first and second channels to communicate with each other. When the male pipe is disconnected from the female pipe, the male piston is away from the female piston, and the first and second channels are blocked respectively. By using this stop valve structure in adjacent pipes of an energy storage system, fluid loss in the pipes during the disassembly of the adjacent pipes can be avoided. The stop valve structure is mounted between the adjacent pipes, with the male and female valves capable of sealing the adjacent pipes respectively to prevent fluid loss during disassembly. It is understood that one end of the first channel in the male valve is used to connect to one pipe, and one end of the second channel in the female valve is used to connect to another pipe. By utilizing the structure of the male and female valves that can communicate or block flow, the two pipes can be communicated or blocked. When the two pipes are blocked separately, they can be disconnected, meaning that when one of the pipes needs to be repaired or replaced, the fluid can be contained within the pipes. This allows operations to be performed only on the pipe section that needs replacement, without disrupting the normal operation of other parts of the pipe, ensuring that the energy storage system continues to function without interference during maintenance.

### BRIEF DESCRIPTION OF THE DRAWINGS

For more clearly illustrating technical solutions in the embodiments of the present application or the technical solution in the conventional technology, drawings referred to describe the embodiments or the conventional technology will be briefly described hereinafter. Apparently, the drawings in the following description show only several embodiments of the present application. For those skilled in the art, other drawings may be obtained based on the structures shown by these drawings without any creative efforts.
FIG. 1 is a schematic structural view of a stop valve structure provided according to the present application;
FIG. 2 is a schematic perspective view of a female valve shown in FIG. 1;
FIG. 3 is a schematic perspective view of a male valve shown in FIG. 1;
FIG. 4 is a schematic structural view of a male valve shown in FIG. 1;
FIG. 5 is a schematic structural view of a female valve shown in FIG. 1;
FIG. 6 is a schematic structural view of a fluid conveying structure;
FIG. 7 is a schematic structural view of a main pipe shown in FIG. 6;
FIG. 8 is a schematic structural view of a branch pipe shown in FIG. 6;
FIG. 9 is a schematic structural view of a battery pack shown in FIG. 6.

Reference numerals in the drawings are as follows:

| reference numeral | name | reference numeral | name |
|---|---|---|---|
| 10 | main pipe | 230 | second channel |
| 11 | main pipe body | 230a | third segment |
| 12 | infusion port | 230b | fourth segment |
| 13 | liquid discharge valve | 231 | female pipe |
| 20 | stop valve structure | 232 | female piston |
| 21 | male valve | 2321 | through hole |
| 210 | first channel | 232a | female piston rod |
| 210a | first segment | 232b | female stop plate |
| 210b | second segment | 233 | second limiting protrusion |
| 211 | male pipe | 234 | second gap |
| 212 | male piston | 235 | second spring |
| 212a | male piston rod | 236 | female valve body connection end |
| 212b | male stop plate | 237 | second sealing ring |
| 213 | first limiting protrusion | 30 | branch pipe |
| 214 | first gap | 31 | branch pipe body |
| 215 | first spring | 50 | battery pack |
| 216 | male valve body connection end | 51 | battery pack main body |
| 217 | first sealing ring | 70 | liquid inlet pipe |
| 23 | female valve | 80 | liquid return pipe |

Objects, functional characteristics and advantages of the present application will be further described in conjunction with the embodiments and with reference to the drawings.

### DETAILED DESCRIPTION OF THE EMBODIMENTS

The technical solutions in the embodiments of the present application will be described clearly and completely hereinafter in conjunction with the drawings in the embodiments of the present application. Apparently, the described embodiments are only a part rather than all of the embodiments of the present application. Any other embodiments obtained by those skilled in the art based on the embodiments in the present application without any creative effort fall within the protection scope of the present application.

It should be noted that all directional indications (such as up, down, left, right, front, back and the like) in the embodiments of the present application are only used to explain a relative position relationship, movements, or the like between components under a particular attitude (as shown in the drawings). If the particular attitude changes, the directional indications change accordingly.

In the description of the present application, it should be pointed out that, terms "connect" and "fix" should be understood broadly, unless otherwise specifically defined. For example, it can be fixedly connected or detachably connected or integrally connected; it can be mechanically connected or electrically connected; it can be directly connected or indirectly connected through intermediate media, or inner parts of two components are in communication with each other, or the interaction between the two components, unless otherwise explicitly defined. For those skilled in the art, the specific meanings of the terms in the present application may be understood according to specific situations.

Furthermore, descriptions such as "first", "second", and the like in the present application are used only for descriptive purposes, and should not be construed as indicating or implying their relative importance or implicitly specifying the number of the indicated technical features. Therefore, a feature defined with "first" and "second" may explicitly or implicitly include at least one of the features. In addition, in the context of the present application, the "and/or" means that there can be three kinds of relationships, for example, A and/or B means that there are three cases: A alone, A and B at the same time, and B alone. In addition, the technical solutions of the various embodiments can be combined with each other, based on the ways that can be implemented by a person skilled in the art. When the combination of technical solutions is contradictory or cannot be enabled, it should be considered that such a combination of technical solutions does not exist, and is not within the protection scope of the present application.

A stop valve structure is provided according to the present application, including a male valve 21 and a female valve 23. The male valve 21 includes a male pipe 211 and a male piston 212. A first channel 210 is formed in the male pipe 211 and passes through the male pipe 211, and the male piston 212 is movably disposed in the first channel 210 to block the first channel 210 or make the first channel 210 in communication. The female valve 23 includes a female pipe 231 and a female piston 232. A second channel 230 is formed in the female pipe 231 and passes through the female pipe 231, and the female piston 232 is movably disposed in the second channel 230 to block the second channel 230 or make the second channel 230 in communication. When the male pipe 211 is connected to the female pipe 231, the male piston 212 abuts against the female piston 232, and the first channel 210 is communicated with the second channel 230. When the male pipe 211 is disconnected from the female pipe 231, the male piston 212 is away from the female piston 232, and the first channel 210 and the second channel 230 are respectively blocked.

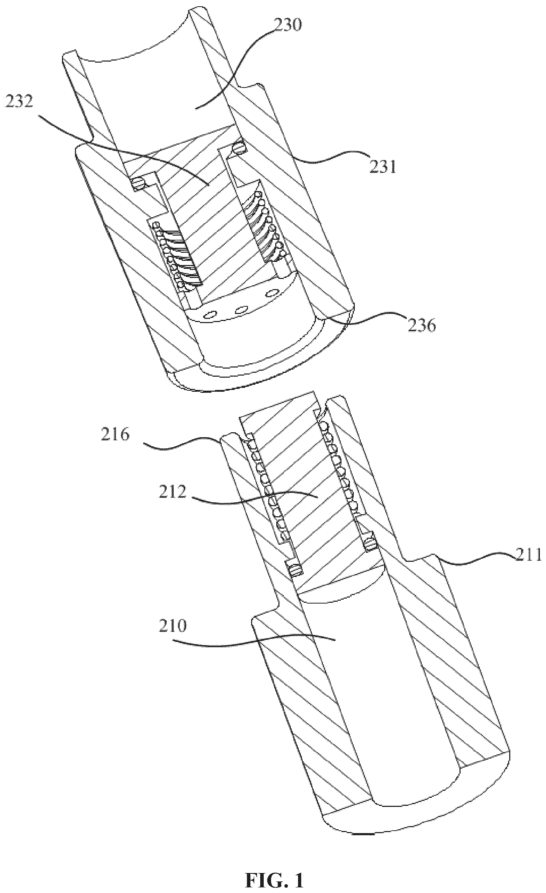

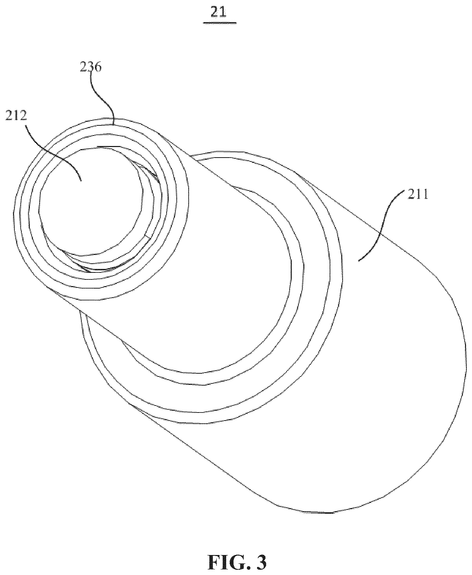

Existing liquid cooling devices for the energy storage systems typically require the addition of coolant in the battery pack, and both pipe and battery pack need to be replaced if damaged. During the replacement process, it is necessary to avoid draining the cooling medium when the pipe is replaced. As shown in FIGS. 1 to 3, a stop valve structure 20 is provided according to the present application. The stop valve structure includes a male valve 21 and a female valve 23. The male valve 21 includes a male pipe 211 and a male piston 212. A first channel 210 is formed in the male pipe 211 and passes through the male pipe 211, one end of the first channel 210 is configured to connect to one pipe, and the male piston 212 is movably disposed within the first channel 210 to block the first channel 210 or make the first channel 210 in communication. The female valve 23 includes a female pipe 231 and a female piston 232. A second channel 230 is formed in the female pipe 231 and passes through the female pipe 231, one end of the second channel 230 is configured to connect to another pipe, and the female piston 232 is movably disposed within the second channel 230 to block the second channel 230 or make the second channel 230 in communication. When the male pipe 211 is connected to the female pipe 231, the male piston 212 abuts against the female piston 232, and the first channel 210 is communicated with the second channel 230 allow the two pipes to communicate. When the male pipe 211 is disconnected from the female pipe 231, the male piston 212 is away from the female piston 232, and the first channel 210 and the second channel 230 are blocked respectively to allow the two pipes to be disconnected. In this way, by using the stop valve structure 20 in adjacent pipes of the energy storage system, the loss of fluid in the pipes during the disconnection of the adjacent pipes is avoided. By providing the stop valve structure 20 between the adjacent pipes, the male valve 21 and the female valve 23 of the stop valve structure 20 may separately block the two adjacent pipes to prevent fluid loss during disconnection. It is understood that one end of the first channel in the male valve is used to connect to one pipe, and one end of the second channel in the female valve is used to connect to another pipe. With the structure of the male and female valves that can both communicate and block, the two pipes can be communicated or blocked separately. When the two pipes are blocked separately, they can be disconnected. That is, when one of the pipes needs to be repaired or replaced, the fluid can be contained within the pipe, allowing only the pipe that needs to be replaced to be manipulated without disrupting the normal operation of other parts of the pipe, thus ensuring that the energy storage system continues to operate without interruption during maintenance.

For example, a fluid conveying structure includes a main pipe 10 for carrying cooling medium and a branch pipe 30. The branch pipe 30 is detachably mounted on the main pipe 10 and is in communication with the main pipe 10. The stop valve structure 20 is provided at the connection of the main pipe 10 and the branch pipe 30. The branch pipe 30 is configured to convey the cooling medium to a battery pack 50. The cooling medium is conveyed to the battery pack 50 through the main pipe 10 and the branch pipe 30 to cool the battery pack 50. To facilitate individual inspection and maintenance of each pipe, the main pipe 10 and the branch pipe 30 are detachably connected, thereby allowing them to be disconnected during repair or replacement for easy maintenance. Moreover, to prevent the loss of the cooling medium during pipe disassembly, the stop valve structure 20 is provided between the main pipe 10 and the branch pipe 30. The stop valve structure 20 can block the main pipe 10 and the branch pipe 30 separately, preventing the loss of the cooling medium during disassembly. This allows for operation on the pipe segment that needs replacement without disrupting the normal operation of other pipe segments, ensuring that the cooling of the battery pack 50 is not interfered with during maintenance, and avoiding the impact on the battery pack 50 due to cessation of cooling.

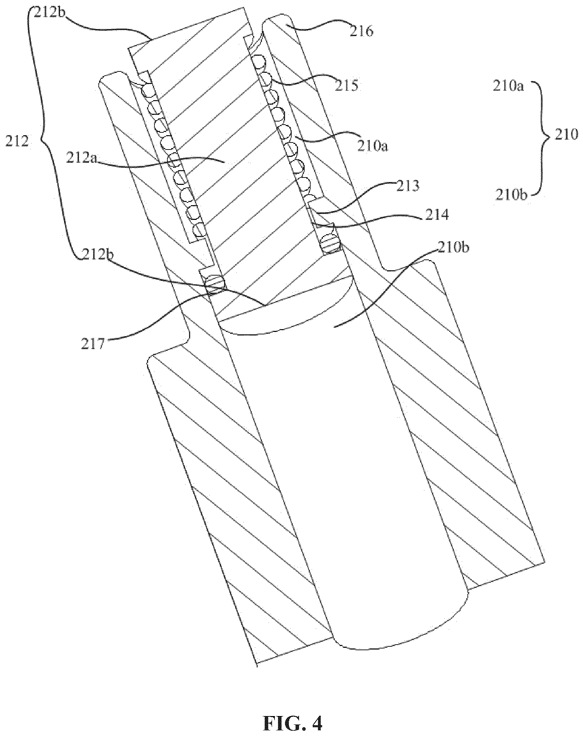

Further, as shown in FIG. 4, a first limiting protrusion 213 is formed on an inner wall of the male pipe 211. The first limiting protrusion 213 divides the first channel 210 into a first segment 210a and a second segment 210b that are communicated with each other. Two ends of the male piston 212 are respectively disposed in the first segment 210a and the second segment 210b, so that when one end of the male piston 212 moves to the first limiting protrusion 213, the male piston 212 is stopped and the first channel 210 is blocked. This allows one end of the male piston 212, when subjected to force, to move to the first limiting protrusion 213 where it is stopped. When one end of the male piston 212 is stopped by the first limiting protrusion 213, the first channel 210 is blocked. When the other end of the male piston 212 moves towards the first limiting protrusion 213 under force, the first channel 210 is not blocked. The overall movement of the male piston 212 causes the other end to move towards the first limiting protrusion 213, which in turn causes the one end to move away from the first limiting protrusion 213, communicating the blocked channel.

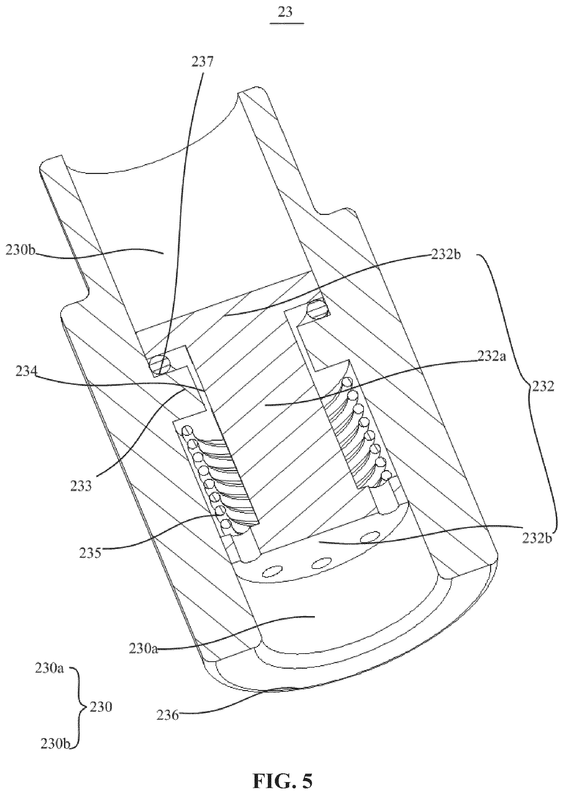

As shown in FIG. 5, a second limiting protrusion 233 is formed on an inner wall of the female pipe 231. The second limiting protrusion 233 divides the second channel 230 into a third segment 230a and a fourth segment 230b that are communicated with each other. The two ends of the female piston 232 are respectively disposed in the third segment 230a and the fourth segments 230b, so that when one end of the female piston 232 moves to the second limiting protrusion 233, the female piston 232 is stopped and the second channel 230 is blocked. This allows one end of the female piston 232, when subjected to force, to move towards the second limiting protrusion 233 where the female piston 232 is stopped and the second channel 230 is blocked. When the other end of the female piston 232 moves towards the second limiting protrusion 233 due to force, the second channel 230 is not blocked. The movement of the other end of the female piston 232 towards the second limiting protrusion 233 causes the one end to move away from the second limiting protrusion 233, thus communicating the blocked channel.

It can be understood that when the male valve 21 is communicated with the female valve 23, the male piston 212 and the female piston 232 come into contact with each other, generating a pushing force. This force causes the other end of the male piston 212 to move towards the first limiting protrusion 213, communicating the first channel 210. Simultaneously, the force causes the other end of the female piston 232 to move towards the second limiting protrusion 233, communicating the second channel 230. In this way, the first channel 210 is communicated with the second channel 230.

When the male valve 21 and the female valve 23 are disconnected from each other, the male piston 212 is subjected to the impact force of the fluid, causing one end to move towards the first limiting protrusion 213 where it is stopped and the pipe is blocked. The pipe connected to the male valve 21 does not leak fluid from the male valve 21. The female piston 232 is subjected to the impact force of the fluid, causing one end to move towards the second limiting protrusion 233 where it is stopped and the pipe is blocked. The pipe connected to the female valve 23 does not leak fluid from the female valve 23. This ensures that each pipe is blocked when the male valve 21 and the female valve 23 are disconnected.

Furthermore, as shown in FIG. 4, the male piston 212 includes a male piston rod 212a and two male stop plates 212b. The male piston rod 212a extends through the first segment 210a and the second segment 210b, and a first gap 214 is formed between the male piston rod 212a and the first limiting protrusion 213. The two male stop plates 212b are respectively disposed at both ends of the male piston rod 212a, with a first slit formed between the periphery of each male stop plate 212b and the inner wall of the first channel 210, allowing one of the male stop plates 212b to be stopped when it moves to the first limiting protrusion 213 and to block the first gap 214.

That is, the male piston rod 212a extends through the first segment 210a and the second segment 210b, and the first gap 214 is formed between the male piston rod 212a and the first limiting protrusion 213. This allows fluid to flow between the first segment 210a and the second segment 210b through the first gap 214 when the first channel 210 is not blocked.

The two male stop plates 212b are respectively disposed at both ends of the male piston rod 212a, with a first slit formed between the periphery of each male stop plate 212b and the inner wall of the first channel 210. This allows fluid to flow through the first channel 210 from the first slits, enabling fluid communication between the two pipes connected by the stop valve structure 20.

Meanwhile, the two male stop plates 212b are respectively disposed at both ends of the male piston rod 212a, so that one of the male stop plates 212b is stopped when the male stop plate 212b moves to the first limiting protrusion 213 and the first gap 214 is sealed. Once the first gap 214 is blocked, the first channel 210 is blocked, preventing fluid flow between the first segment 210a and the second segment 210b. This blocks the pipe equipped with the male valve 21, facilitating the disconnection of the two pipes connected by the stop valve structure 20.

The female piston 232 includes a female piston rod 232a and two female stop plates 232b. The female piston rod 232a extends through the third segment 230a and the fourth segment 230b, and a second gap 234 is formed between the female piston rod 232a and the second limiting protrusion 233. The two female stop plates 232b are respectively disposed at both ends of the female piston rod 232a, with a second slit formed between the periphery of each female stop plate 232b and the inner wall of the second channel 230, allowing one of the female stop plates 232b to be stopped when it moves to the second limiting protrusion 233 and to seal the second gap 234.

That is, the second gap 234 is formed between the female piston rod 232a and the second limiting protrusion 233, so as to make fluid convenient to flow between the third segment 230a and the fourth segment 230b through the second gap 234 when the second channel 230 is not blocked.

The two female stop plates 232b are respectively disposed at both ends of the female piston rod 232a, with a second slit formed between the periphery of each female stop plate 232b and the inner wall of the second channel 230. This allows fluid to flow through the second channel 230 from the second slit, enabling fluid communication between the two pipes connected by the stop valve structure 20.

Meanwhile, a second slit is formed between the periphery of each female stop plate 232b and the inner wall of the second channel 230, allowing one of the female stop plates 232b to be stopped when the female stop plate moves to the second limiting protrusion 233 and to seal the second gap 234. Once the second gap 234 is sealed, the second channel 230 is blocked, preventing fluid flow between the third segment 230a and the fourth segment 230b. This blocks the pipe equipped with the female valve 23, facilitating the disconnection of the two pipes connected by the stop valve structure 20.

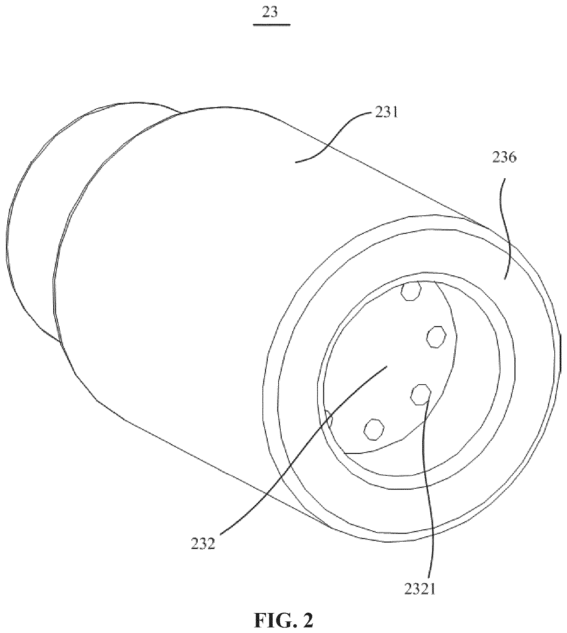

Furthermore, as shown in FIGS. 2 to 5, one end of the male pipe 211 is defined as a male valve body connection end 216, and one end of the female pipe 231 is defined as a female valve body connection end 236, with the female valve body connection end 236 inserted into the male valve body connection end 216. The end of the male piston rod 212a located at the male valve body connection end 216 protrudes from the end of the male pipe 211, while the female piston rod 232a is located inside the female pipe 231 at the end of the female valve body connection end 236. This design facilitates, after the female valve 23 and the male valve 21 are connected by inserting the female valve body connection end 236 into the male valve body connection end 216, as shown in FIG. 1, the opposing ends of the male piston rod 212a and the female piston rod 232a abutting and contacting, driving the male piston rod 212a and the female piston rod 232a to move in opposite directions, so that the male piston rod 212a does not block the first channel 210 and the female piston rod 232a does not block the second channel 230, which allows the first channel 210 and the second channel 230 to communicate with each other and enabling the communication of the adjacent pipes equipped with the stop valve structure 20.

Furthermore, as shown in FIG. 4, the first segment 210a is defined as being located at the male valve body connection end 216, and the male piston rod 212a is provided with a first spring 215 sleeved outside its outer circumferential surface in the first segment 210a. In this way, after the male valve and the female valve are disconnected from each other, the male piston rod 212a, under the extending action of the first spring 215, drives the entire male piston rod 212a to move, causing the male stop plate 212b at one end to move towards the first limiting protrusion 213 and stop against the first limiting protrusion 213, thereby blocking the first channel 210.

And/or, furthermore, as shown in FIG. 5, the third segment 230a is defined as being located at the female valve body connection end 236, and the female piston rod 232a is provided with a second spring 235 sleeved outside its outer circumferential surface in the third segment 230a. In this way, after the male valve and female valve are disconnected from each other, the female piston rod 232a, under the extending action of the second spring 235, drives the entire second spring 235 to move, causing the female stop plate 232b at one end to move towards the second limiting protrusion 233 and stop against the second limiting protrusion 233, thereby blocking the second channel 230.

And/or, furthermore, as shown in FIGS. 2 and 5, the third segment 230a is defined as being located at the female valve body connection end 236, and the female stop plate 232b located in the third segment 230a is provided with a through hole 2321, with a projection of the through hole 2321 corresponding to the second limiting protrusion 233. This design facilitates the flow of fluid through the through hole 2321.

And/or, furthermore, as shown in FIG. 4, the second segment 210b is defined as being opposite to and away from the male valve body connection end 216, and a first sealing ring 217 is provided between the male stop plate 212b located in the second segment 210b and the first limiting protrusion 213. In this way, when the male stop plate 212b located in the second segment 210b is stopped against the first limiting protrusion 213, the sealing performance is improved by the first sealing ring 217.

And/or, furthermore, as shown in FIG. 5, the fourth segment 230b is defined as being opposite to and away from the female valve body connection end 236, and a second sealing ring 237 is provided between the female stop plate 232b located in the fourth segment 230b and the second limiting protrusion 233. In this way, when the female stop plate 232b located in the fourth segment 230b is stopped against the second limiting protrusion 233, the sealing performance is enhanced by the second sealing ring 237.

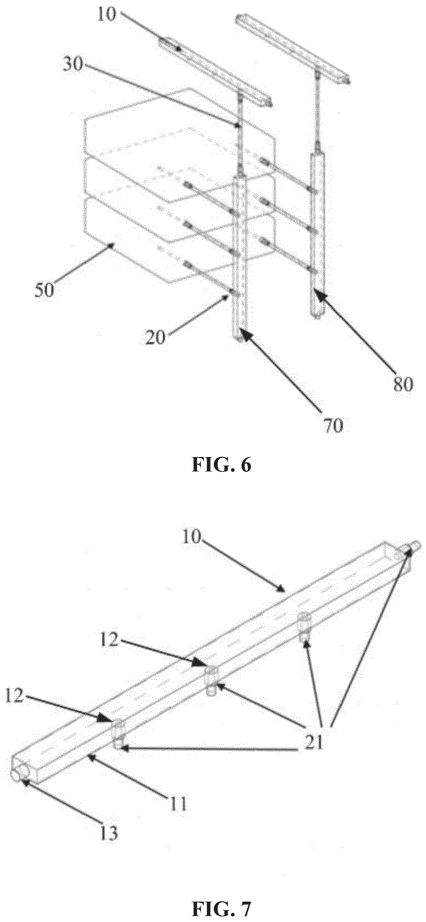

As shown in FIG. 6, a fluid conveying structure is further provided according to the present application, including a pipe unit consisting of a main pipe 10 and a branch pipe 30. The main pipe 10 includes a main pipe body 11 for carrying fluid. The branch pipe 30 is detachably mounted on the main pipe 10 and includes a branch pipe body 31 for carrying fluid, and the branch pipe 30 is communicated to the main pipe 10. A stop valve structure 20 is provided at the connection of the main pipe 10 and the branch pipe 30. The main pipe 10 is provided with one of a male valve 21 and a female valve 23, and the branch pipe 30 is provided with the other of the male valve 21 and the female valve 23. The branch pipe 30 is configured to convey fluid to a battery pack 50 or discharge fluid from the battery pack 50. By providing the stop valve structure 20 between the main pipe 10 and the branch pipe 30, fluid will not flow out from the disconnection point during maintenance and disassembly, thereby facilitating individual maintenance of each pipe. This avoids the issue of fluid flowing out from the disconnection point during conventional maintenance, and reduces maintenance time and costs.

Since the stop valve structure 20 adopts all the technical solutions of the aforementioned embodiments, it at least has all the beneficial effects brought by the technical solutions of the aforementioned embodiments, which will not be repeated here.

Furthermore, the fluid conveying structure includes at least two pipe units, with at least one pipe unit being a liquid inlet pipe 70 and at least another pipe unit being a liquid return pipe 80. The liquid inlet pipe 70 is used to introduce fluid into the battery pack 50, and the liquid return pipe 80 is used to discharge fluid from the battery pack 50. This constitutes a circulating cooling circuit, improving the cooling effect of the battery pack.

Furthermore, the main pipe 10 includes at least two main pipe segments, with adjacent main pipe segments connected in series through the stop valve structure 20. This allows the main pipe 10 to be extended as needed and facilitates disassembly and maintenance of a segment of the main pipe. Similarly, the branch pipe 30 includes at least two branch pipe segments, with adjacent branch pipe segments connected in series through the stop valve structure 20. This allows the branch pipe 30 to be extended as needed to facilitate maintenance of a segment of the branch pipe.

Further, as shown in FIGS. 6 and 7, the main pipe 10 is provided with multiple infusion ports 12, with one infusion port 12 correspondingly connected to one branch pipe 30. This facilitates the connection of multiple battery packs 50.

Further, as shown in FIG. 7, the main pipe 10 is provided with a liquid discharge valve 13, through which the fluid can be discharged or introduced.

Further, as shown in FIG. 6, at least one branch pipe 30 is connected to two main pipes 10, is arranged in parallel with one of the main pipes 10 and intersects with the other main pipe 10. This allows for the setup of multi-level pipe as needed, effectively arranging the battery packs 50 so that they can be not only stacked but also adjacently arranged side by side, enabling centralized cooling of the battery packs 50.

It is also understood that the main pipe 10 and the branch pipe 30 are covered with an insulation layer. The specific material and shape of the main pipe 10 and the branch pipe 30 are not limited. For example, the main pipe 10 and the branch pipe 30 may be made of metal or non-metal material, and may be in a shape of square or round.

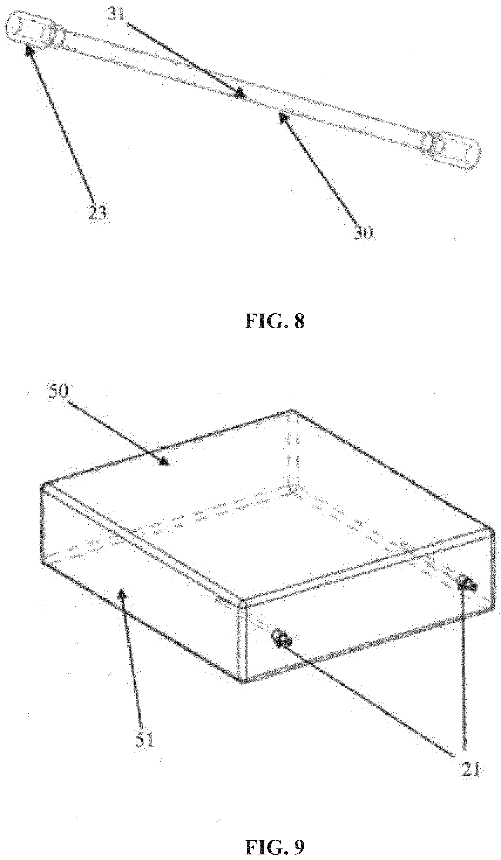

An energy storage system is further provided according to the present application, as shown in FIGS. 6 to 9. The energy storage system includes the fluid conveying structure and the battery pack 50, with at least one branch pipe 30 used to connect to the battery pack 50, and a stop valve structure 20 provided at the connection between the branch pipe 30 and the battery pack 50. The battery pack 50 is provided with one of a male valve 21 and a female valve 23, and the branch pipe 30 is provided with the other of the male valve 21 and the female valve 23. The battery pack 50 includes a battery pack main body 51. The battery pack main body 51 is connected to the male valve 21, and the branch pipe 30 is provided with the female valve 23. The branch pipe 30 and the battery pack 50 are connected through the male valve 21 and the female valve 23 to facilitate the inflow and outflow of fluid to and from the battery pack 50.

Since the fluid conveying structure adopts all the technical solutions of the aforementioned embodiments, it at least has all the beneficial effects brought by the technical solutions of the aforementioned embodiments, which will not be repeated here.

An electrical device is further provided according to the present application, including the energy storage system. The electrical device is powered by the energy storage system.

Since the energy storage system adopts all the technical solutions of the aforementioned embodiments, it at least has all the beneficial effects brought by the technical solutions of the aforementioned embodiments, which will not be repeated here.

The above descriptions are only optional embodiments of the present application, and are not intended to limit the patent scope of the present application. Any equivalent structural transformation made based on the specification and drawings of the present application or direct/indirect application in other related technical fields without departing from the concept of the present application is included in the protection scope of the present application.

## Claims

1. A stop valve structure, comprising:
a male valve (21), wherein the male valve (21) comprises a male pipe (211) and a male piston (212), a first channel (210) is formed in the male pipe (211) and passes through the male pipe (211), and the male piston (212) is movably disposed within the first channel (210) to block the first channel (210) or make the first channel (210) in communication; and
a female valve (23), wherein the female valve (23) comprises a female pipe (231) and a female piston (232), a second channel (230) is formed in the female pipe (231) and passes through the female pipe (231), and the female piston (232) is movably disposed within the second channel (230) to block the second channel (230) or make the second channel (230) in communication;
wherein when the male pipe (211) is connected to the female pipe (231), the male piston (212) abuts against the female piston (232), and the first channel (210) is communicated with the second channel (230); and
when the male pipe (211) is disconnected from the female pipe (231), the male piston (212) is away from the female piston (232), and the first channel (210) and the second channel (230) are blocked respectively.

2. The stop valve structure according to claim 1, wherein a first limiting protrusion (213) is formed on an inner wall of the male pipe (211), the first limiting protrusion (213) divides the first channel (210) into a first segment (210a) and a second segment (210b) connected with each other, both ends of the male piston (212) are respectively disposed in the first segment (210a) and the second segment (210b), so that one end of the male piston (212) is stopped when the male piston (212) moves to the first limiting protrusion (213) and the first channel (210) is blocked; and
a second limiting protrusion (233) is formed on an inner wall of the female pipe (231), the second limiting protrusion (233) divides the second channel (230) into a third segment (230a) and a fourth segment (230b) connected with each other, both ends of the female piston (232) are respectively disposed in the third segment (230a) and the fourth segment (230b), so that one end of the female piston (232) is stopped when the female piston (232) moves to the second limiting protrusion (233) and the second channel (230) is blocked.

3. The stop valve structure according to claim 2, wherein the male piston (212) comprises:
a male piston rod (212a) passing through the first segment (210a) and the second segment (210b), with a first gap (214) being formed between the male piston rod (212a) and the first limiting protrusion (213); and
two male stop plates (212b) respectively disposed at both ends of the male piston rod (212a), with a first slit being formed between the periphery of each male stop plate (212b) and the inner wall of the first channel (210), so that one of the male stop plates (212b) is stopped when the male stop plate (212b) moves to the first limiting protrusion (213) and the first gap (214) is sealed;
wherein the female piston (232) comprises:
a female piston rod (232a) passing through the third segment (230a) and the fourth segment (230b), with a second gap (234) being formed between the female piston rod (232a) and the second limiting protrusion (233); and
two female stop plates (232b) respectively disposed at both ends of the female piston rod (232a), with a second slit being formed between the periphery of each female stop plate (232b) and the inner wall of the second channel (230), so that one of the female stop plates (232b) is stopped when the female stop plate (232b) moves to the second limiting protrusion (233) and the second gap (234) is sealed.

4. The stop valve structure according to claim 3, wherein one end of the male pipe (211) is defined as a male valve body connection end (216), one end of the female pipe (231) is defined as a female valve body connection end (236), and the female valve body connection end (236) is inserted into the male valve body connection end (216);
an end of the male piston rod (212a) located at the male valve body connection end (216) protrudes from the end of the male pipe (211), and an end of the female piston rod (232a) located at the female valve body connection end (236) is disposed inside the female pipe (231).

5. The stop valve structure according to claim 4, wherein the first segment (210a) is defined as being located at the male valve body connection end (216), and the male piston rod (212a) is provided with a first spring (215) sleeved outside an outer circumferential surface of the first segment (210a);
and/or, the third segment (230a) is defined as being located at the female valve body connection end (236), and the female piston rod (232a) is provided with a second spring (235) sleeved outside an outer circumferential surface of the third segment (230a);
and/or, the third segment (230a) is defined as being located at the female valve body connection end (236), and the female stop plate (232b) located in the third segment (230a) has a through hole (2321), a projection of which corresponds to the second limiting protrusion (233);
and/or, the second segment (210b) is defined as being away from the male valve body connection end (216), and a first sealing ring (217) is provided between the male stop plate (212b) located in the second segment (210b) and the first limiting protrusion (213);
and/or, the fourth segment (230b) is defined as being away from the female valve body connection end (236), and a second sealing ring (237) is provided between the female stop plate (232b) located in the fourth segment (230b) and the second limiting protrusion (233).

6. A fluid conveying structure, comprising a pipe unit having a main pipe (10) for carrying fluid and a branch pipe (30),
wherein the branch pipe (30) is detachably mounted on the main pipe (10) and is in communication with the main pipe (10), and the stop valve structure (20) according to any one of claims 1 to 5 is provided at connection between the main pipe (10) and the branch pipe (30) is provided with, wherein the main pipe (10) is provided with one of the male valve (21) and the female valve (23), and the branch pipe (30) is provided with the other of the male valve (21) and the female valve (23); and
the branch pipe (30) is used to convey fluid to a battery pack (50) or discharge fluid from the battery pack (50).

7. The fluid conveying structure according to claim 6, comprising at least two pipe units, wherein at least one of the pipe units is a liquid inlet pipe (70) and at least another one of the pipe is a liquid return pipe (80),
the liquid inlet pipe (70) is used to introduce fluid into the battery pack (50), and the liquid return pipe (80) is used to discharge the fluid from the battery pack (50).

8. The fluid conveying structure according to claim 6 or 7, wherein the main pipe (10) comprises at least two main pipe segments, adjacent main pipe segments are connected in series through the stop valve structure (20), the branch pipe (30) comprises at least two branch pipe segments, and adjacent branch pipe segments are connected in series through the stop valve structure (20);
and/or, the main pipe (10) is provided with a plurality of infusion ports (12), with one infusion port (12) being correspondingly connected to one branch pipe (30);
and/or, the main pipe (10) is provided with a liquid discharge valve (13);
and/or, at least one branch pipe (30) communicates with two main pipes (10), is arranged in parallel with one of the main pipes (10) and intersects with the other main pipe (10).

9. An energy storage system, comprising the fluid conveying structure according to any one of claims 6 to 8 and a battery pack (50), wherein at least one branch pipe (30) is connected to the battery pack (50), the connection between the branch pipe (30) and the battery pack (50) is provided with the stop valve structure (20), the battery pack (50) is provided with one of the male valve (21) and the female valve (23), and the branch pipe (30) is provided with the other of the male valve (21) and the female valve (23).

10. An electrical device, comprising the energy storage system according to claim 9.
